(19) Europäisches Patentamt
European Patent Office
Office européen des brevets

(11) Veröffentlichungsnummer: **0 005 455**
**B1**

(12) # EUROPÄISCHE PATENTSCHRIFT

(45) Veröffentlichungstag der Patentschrift: **25.02.81**

(51) Int. Cl.³: **C 08 L 83/04,** C 08 K 3/04, H 01 C 7/02

(21) Anmeldenummer: **79101171.1**

(22) Anmeldetag: **18.04.79**

(54) **Verfahren zum Herstellen von elektrisch leitfähigen Organopolysiloxanelastomeren und seine Anwendung.**

(30) Priorität: **18.04.78 DE 2816872**

(43) Veröffentlichungstag der Anmeldung: **28.11.79 Patentblatt 79/24**

(45) Bekanntmachung des Hinweises auf die Patenterteilung: **25.02.81 Patentblatt 81/8**

(84) Benannte Vertragsstaaten: **BE CH DE FR GB IT NL SE**

(56) Entgegenhaltungen:
**DE-A-1 490 164**
**DE-A-2 634 931**
**DE-B-2 103 319**
**GB-B-1 027 051**
**US-A-4 013 611**

(73) Patentinhaber: **WACKER-CHEMIE GMBH, Prinzregentenstrasse 22, D-8000 München 22 (DE)**

(72) Erfinder: **Marsch, Wilhelm, Mehringer Strasse 2 a, D-8263 Burghausen (DE)**
Erfinder: **Wolfer, Dietrich, Dr., A-5110 Untereching 88/Salzburg (AT)**



Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchgebühr entrichtet worden ist (Art. 99(1) Europäisches Patentübereinkommen).

BUNDESDRUCKEREI BERLIN

# Verfahren zum Herstellen von elektrisch leitfähigen Organopolysiloxanelastomeren und seine Anwendung

Beispielsweise aus GB-PS 10 27 051 (veröffentlicht: 20. April 1966, Anmelder: Imperial Chemical Industries Limited), wobei dieser Patentschrift FR-PS 13 75 869 entspricht, ist bereits bekannt, elektrisch leitfähige Organopolysiloxanelastomere durch Vernetzen von Massen auf Grundlage von Diorganopolysiloxan und elektrisch leitfähigem Ruß durch Anlagerung von Si-gebundenem Wasserstoff an aliphatische Mehrfachbindung herzustellen. Beispielsweise aus GB-PS 14 73 371 (Anmelder: Wacker-Chemie GmbH, veröffentlicht: 11. Mai 1977), wobei dieser Patentschrift FR-PS 22 42 420 entspricht, ist auch bereits bekannt, Massen auf Grundlage von Diorganopolysiloxan, welche leitfähigen Kohlenstoff enthalten, durch Hochenergiestrahlen zu vernetzen.

Gegenüber den bisher bekannten elektrisch leitfähigen Organopolysiloxanelastomeren haben die erfindungsgemäß hergestellten Organopolysiloxanelastomeren insbesondere die Vorteile, daß ihr elektrischer Widerstand mit steigender Temperatur zunehmend stärker ansteigt, daß sie also sogenanntes PTC-Verhalten aufweisen, und daß dieses steile Ansteigen des elektrischen Widerstands bereits bei niedrigerer Temperatur, die zudem vorbestimmbar ist, erfolgt und damit auch höhere spezifische Leistungsdichten möglich sind.

Gegenstand der Erfindung ist ein Verfahren zum Herstellen von elektrisch leitfähigen Organopolysiloxanelastomeren durch Vernetzen von Massen auf Grundlage von Diorganopolysiloxan und elektrisch leitfähigem Ruß durch Anlagerung von Si-gebundenem Wasserstoff an aliphatische Mehrfachbindung oder durch ionisierende Strahlung, dadurch gekennzeichnet, daß die zu vernetzenden Massen als elektrisch leitfähigen Ruß 15 bis 60 Gewichtsprozent, bezogen auf das Gewicht von Organopolysiloxan, Furnace-Ruß mit einer Oberfläche von 40 bis 100 m²/g und 5 bis 25 Gewichtsprozent, bezogen auf das Gewicht von Organopolysiloxan, Acetylenruß enthalten.

Die hier in Beschreibung und zumindest einem Patentanspruch angegebenen Werte für Oberflächengrößen sind BET-Werte, also Werte, die durch Stickstoffadsorption gemäß ASTM Special Technical Publication, Nr. 51, 1941, Seite 95 ff., bestimmt wurden bzw. werden.

Furnace-Ruß wird ebenfalls im deutschen Sprachgebrauch als »Furnace Black« bezeichnet (vgl. z. B. Ullmanns Encyklopädie der technischen Chemie, Band 14, München-Berlin, 1963, Seite 799). Ist in den zu vernetzenden Massen weniger Furnace-Ruß als 15 Gewichtsprozent, bezogen auf das Gewicht von Organopolysiloxan, so ergeben diese Massen Elastomere, deren elektrischer Widerstand mit steigender Temperatur unerwünscht langsam ansteigt und in allen Temperaturbereichen unerwünscht hoch ist. Ist in den zu vernetzenden Massen mehr Furnace-Ruß als 60 Gewichtsprozent, bezogen auf das Gewicht von Organopolysiloxan, Furnace-Ruß, so sind die bei der Vernetzung erhaltenen Produkte nicht mehr befriedigend elastisch.

Beträgt die Oberfläche des Furnace-Rußes weniger als 40 m²/g, so ergeben die Massen Elastomere, deren elektrischer Widerstand in allen Temperaturbereichen unerwünscht hoch ist. Beträgt die Oberfläche des Furnace-Rußes mehr als 100 m²/g, so ergeben die Massen Elastomere, deren elektrischer Widerstand mit steigender Temperatur unerwünscht langsam ansteigt.

Ist in den zu vernetzenden Massen weniger als 5 Gewichtsprozent, bezogen auf das Gewicht von Organopolysiloxan, Acetylenruß, so ergeben die Massen ebenfalls Elastomere, deren elektrischer Widerstand in allen Temperaturbereichen unerwünscht hoch ist. Ist in den zu vernetzenden Massen mehr als 25 Gewichtsprozent, bezogen auf das Gewicht von Organopolysiloxan, Acetylenruß, wird ihre Verarbeitung zu schwierig.

Die Oberfläche des Acetylenrußes ist nicht entscheidend. Sie kann z. B. 40 bis 1200 m²/g betragen.

Je größer das Gewichtsverhältnis von Acetylenruß zu Furnace-Ruß ist desto höher ist die Temperatur, bei der der elektrische Widerstand beginnt, mit weiter steigender Temperatur steil anzusteigen, eine Temperatur, die vom Fachmann als Ansprechtemperatur, »switch temperature«, Schalttemperatur, Anomalitätstemperatur oder Curie-Punkt bezeichnet wird. Sie kann bei den erfindungsgemäß hergestellten Elastomeren insbesondere im Bereich von 80 bis 180°C liegen.

Vorzugsweise enthalten bei dem erfindungsgemäßen Verfahren die zu vernetzenden Massen 20 bis 40 Gewichtsprozent, bezogen auf das Gewicht von Organopolysiloxan, Furnace-Ruß und insgesamt 25 bis 50 Gewichtsprozent, bezogen auf das Gewicht von Organopolysiloxan, elektrisch leitfähigen Ruß.

Als Diorganopolysiloxane, welche außer elektrisch leitfähigem Ruß die Grundlage der erfindungsgemäß verwendeten Massen darstellen, können auch im Rahmen der Erfindung alle Diorganopolysiloxane verwendet werden, die bisher in Massen auf Grundlage von Diorganopolysiloxan und elektrisch leitfähigem Ruß verwendet werden konnten, die zu elektrisch leitfähigen Organopolysiloxanelastomeren durch Anlagerung von Si-gebundenem Wasserstoff an aliphatische Mehrfachbindung oder ionisierende Strahlung vernetzt werden konnten. Diese Diorganopolysiloxane sind insbesondere solche, die z. B. durch die allgemeine Formel

$$R_3SiO(SiR_2O)_nSiR_3$$

wiedergegeben werden können. In dieser Formel bedeutet R gleiche oder verschiedene, einwertige, gegebenenfalls substituierte Kohlenwasserstoffreste und *n* eine ganze Zahl im Wert von mindestens 10.

Innerhalb bzw. entlang der Siloxankette in der oben angegebenen Formel können, was in derartigen Formeln üblicherweise nicht dargestellt wird, zusätzlich zu den Diorganosiloxaneinheiten ($SiR_2O$) noch andere Siloxaneinheiten vorliegen. Beispiele für solche anderen, meist nur als Verunreinigungen vorliegenden Siloxaneinheiten sind solche der Formeln $RSiO_{3/2}$, $R_3SiO_{1/2}$ und $SiO_{4/2}$, wobei R jeweils die oben dafür angegebene Bedeutung hat. Die Menge an solchen anderen Siloxaneinheiten ist jedoch vorzugsweise höchstens 1 Molprozent. Wieder andere Siloxaneinheiten, wie solche der Formel $-SiR_2R'SiR_2O-$, wobei R die oben dafür angegebene Bedeutung hat und R' ein zweiwertiger Kohlenwasserstoffrest, z. B. ein Phenylrest, ist, können auch in größeren Mengen vorhanden sein.

Vorzugsweise enthalten die gegebenenfalls substituierten Kohlenwasserstoffreste R 1 bis 8 Kohlenstoffatome.

Beispiele für Kohlenwasserstoffreste R sind Alkylreste, wie der Methyl- und Äthylrest, sowie Propyl-, Butyl- und Hexylreste; Alkenylreste, wie der Vinyl-, Allyl-, Äthylallyl- und Butadienylreste; Arylreste, wie der Phenylrest; Alkarylreste, wie Tolylreste; und Aralkylreste, wie der beta-Phenyläthylrest.

Beispiele für substituierte Kohlenwasserstoffreste R sind insbesondere halogenierte Kohlenwasserstoffreste, wie der 3,3,3-Trifluorpropylrest, Chlorphenyl- und Bromtolylreste; und Cyanalkylreste, wie der beta-Cyanäthylrest.

Wegen der leichteren Zugänglichkeit sind vorzugsweise mindestens 80% der Anzahl der Reste R Methylreste.

Besonders bevorzugt sind Trimethylsiloxy- oder Vinyldimethylsiloxygruppen als endständige Einheiten aufweisende Diorganopolysiloxane mit 0,01 bis 5 Molprozent Methylvinylsiloxaneinheiten, insbesondere 0,1 bis 2 Molprozent Methylvinylsiloxaneinheiten, und Dimethylsiloxaneinheiten als restlichen Diorganosiloxaneinheiten.

Insbesondere wenn die Massen durch Anlagerung von Si-gebundenem Wasserstoff an aliphatische Mehrfachbindung vernetzt werden sollen, müssen ohnehin in dem außer elektrisch leitfähigen Ruß die Grundlage der Massen bildenden Diorganopolysiloxan mindestens 2 Alkenylreste je Molekül von Diorganopolysiloxan vorhanden sein.

Die Viskosität von außer elektrisch leitfähigem Ruß die Grundlage der Masse bildendem Diorganopolysiloxan beträgt vorzugsweise 100 mPa · s bei 25°C, insbesondere mindestens $10^5$ mPa · s bei 25°C.

Wenn die Massen durch Anlagerung von Si-gebundenem Wasserstoff an aliphatische Mehrfachbindung vernetzt werden sollen, müssen sie zusätzlich zu elektrisch leitfähigem Ruß und zu Alkenylreste enthaltendem Diorganopolysiloxan mindestens eine Organosiliciumverbindung mit mindestens 3 Si-gebundenen Wasserstoffatomen je Molekül und mindestens einen die Anlagerung von Si-gebundenem Wasserstoff an aliphatische Mehrfachbindung fördernden Katalysator enthalten.

Die Organosiliciumverbindungen mit mindestens 3 Si-gebundenen Wasserstoffatomen je Molekül sind meist Organopolysiloxane, insbesondere Methylwasserstoffpolysiloxane.

Die Organosiliciumverbindungen mit mindestens 3 Si-gebundenen Wasserstoffatomen je Molekül werden vorzugsweise in Mengen von 0,5 bis 20 Gewichtsprozent, bezogen auf das Gewicht der Alkenylreste enthaltenden Diorganopolysiloxane, eingesetzt.

Beispiele für die Anlagerung von Si-gebundenem Wasserstoff an aliphatische Mehrfachbindung fördernde Katalysatoren sind metallisches und feinverteiltes Platin, Ruthenium, Rhodium, Palladium und Iridium, wobei sich diese Metalle jeweils auf Trägern, wie erfindungsgemäß verwendetem Ruß, Siliciumdioxyd, Aluminiumoxyd oder Aktivkohle, befinden können, und Verbindungen oder Komplexe dieser Elemente, wie $PtCl_4$, $PtCl_6 \cdot 6\,H_2O$, $Na_2PtCl_4 \cdot 4\,H_2O$, Platin-Olefin-Komplexe, Platin-Alkohol-Komplexe, Platin-Alkoholat-Komplexe, Platin-Äther-Komplexe, Platin-Aldehyd-Komplexe, Platin-Keton-Komplexe, z. B. ein Umsetzungsprodukt aus $PtCl_6 \cdot 6\,H_2O$ und Cyclohexanon, Platin-Vinylsiloxan-Komplexe, insbesondere Platin-Divinyltetramethyldisiloxan-Komplexe mit oder ohne Gehalt an nachweisbarem, anorganisch gebundenem Halogen, Bis-(gamma-picolin)dichlorid, Trimethylendiypridin-platindichlorid; ferner Eisen-, Nickel- und Kobaltcarbonyle.

Wird als die Anlagerung von Si-gebundenem Wasserstoff an aliphatische Mehrfachbindung fördernder Katalysator eines der oben genannten Edelmetalle, eine Verbindung und/oder ein Komplex dieser Edelmetalle eingesetzt, so werden diese Katalysatoren vorzugsweise in Mengen von 0,5 bis 500 ppm (Gewichtsteilen je Million Gewichtsteilen), berechnet als Element Edelmetall und bezogen auf das Gewicht von Alkenylreste enthaltendem Diorganopolysiloxan, eingesetzt.

Zusätzlich zu die Grundlage der Massen bildendem Diorganopolysiloxan, elektrisch leitfähigem Ruß und gegebenenfalls Organosiliciumverbindung mit mindestens 3 Si-gebundenen Wasserstoffatomen je Molekül und die Anlagerung von Si-gebundenem Wasserstoff an aliphatische Mehrfachbindung förderndem Katalysator können die erfindungsgemäß verwendeten Massen weitere Stoffe enthalten, die auch bisher beim Herstellen von Massen auf Grundlage von Diorganopolysiloxan und elektrisch leitfähigem Ruß, die zu elektrisch leitfähigen Organopolysiloxanelastomeren durch Anlagerung von Si-gebundenem Wasserstoff an aliphatische Mehrfachbindung oder ionisierende Strahlung verwendet werden konnten, zusätzlich

zu vorstehend genannten wesentlichen Bestandteilen mitverwendet werden konnten. Beispiele für solche weiteren Stoffe sind andere verstärkende und nicht verstärkende Füllstoffe als Furnace- und Acetylenruß, Wärmestabilisatoren, Antioxydantien, Verarbeitungshilfsmittel, wie Si-gebundene Hydroxylgruppen enthaltende Organopolysiloxane mit höchstens 100 Si-Atomen je Molekül, die Vernetzung verzögernde Mittel und Weichmacher sowie Mittel zur Verbesserung der Haftung der Elastomeren auf Unterlagen, auf denen sie erzeugt wurden.

Beispielhaft für Weichmacher sind insbesondere durch Trimethylsiloxygruppen endblockierte Dimethylpolysiloxane mit höchstens 1000 Si-Atomen je Molekül.

Beispiele für andere verstärkende Füllstoffe als Furnace- und Acetylenruß sind pyrogen erzeugtes Siliciumdioxyd, unter Erhaltung der Struktur entwässerte Kieselsäurehydrogele, Kieselsäurexerogele, pyrogen erzeugtes Aluminiumoxyd und pyrogen erzeugtes Titandioxyd.

Beispiele für nicht verstärkende Füllstoffe sind Calciumcarbonat, Quarzmehl und Diatomeenerde.

Die erfindungsgemäß verwendeten Massen können auch faserige Füllstoffe, wie Glasfasern mit einer mittleren Länge von höchstens 0,5 mm, und/oder Asbestfasern enthalten.

Alle vorstehend genannten Füllstoffe, einschließlich der erfindungsgemäß verwendeten Rußarten, oder ein Teil dieser Füllstoffe können bzw. kann an der Oberfläche Organosilylgruppen aufweisen. Dies kann z. B. dadurch bewerkstelligt werden, daß zumindest ein Teil der Füllstoffe vor und/oder nach dem Vermischen mit die Grundlage der Massen bildendem Diorganopolysiloxan mit Hexamethyldisilazan behandelt wurde.

Beispiele für die Vernetzung verzögernde Mittel sind Benzotriazol und Alkinole.

Beispielhaft für Mittel zur Verbesserung der Haftung der Elastomeren auf Unterlagen, auf denen sie erzeugt wurden, sind Glycidyloxypropyltrialkoxysilane.

Die Herstellung der erfindungsgemäß verwendeten Massen kann durch einfaches Vermischen der Bestandteile erfolgen. Die dabei angewandte Reihenfolge der Zugabe der Bestandteile ist nicht entscheidend.

Die Formgebung der erfindungsgemäß verwendeten Massen erfolgt vorzugsweise durch Extrudieren.

Die bei der Vernetzung der Massen durch Anlagerung von Si-gebundenem Wasserstoff an aliphatische Mehrfachbindung angewandten Temperaturen sind nicht entscheidend. Vorzugsweise betragen sie 18 bis 250°C, wobei Temperaturen im Bereich von 80 bis 200°C besonders bevorzugt sind. Diese Vernetzung kann durch zusätzliche Anwendung von Ultraviolettstrahlen oder Infrarotstrahlen beschleunigt werden.

Werden die Massen ausschließlich durch ionisierende Strahlung vernetzt, so kann es sich bei dieser Strahlung um Ultraviolett-, Röntgen-, alpha-, beta- und/oder gamma-Strahlung handeln. Werden die Massen ausschließlich durch ionisierende Strahlung vernetzt, so ist eine Dosis von 5 bis 8 Megarad bevorzugt.

Das erfindungsgemäße Verfahren kann z. B. zum Herstellen von elektrisch leitenden Platten, Beschichtungen, Bändern und Profilen angewendet werden.

In den folgenden Beispielen beziehen sich alle Angaben von Teilen und Prozentsätzen auf das Gewicht, soweit nichts anderes angegeben ist.

Die in den folgenden Beispielen verwendete Lösung eines Platin-Keton-Komplexes wurde hergestellt wie folgt:

Zu 200 g Cyclohexanon, das auf 80°C erwärmt ist, wird 1 g $H_2PtCl_6 \cdot 6\,H_2O$ gegeben. Die so erhaltene Lösung wird 45 Minuten auf 80°C erwärmt und dann mittels wasserfreiem Natriumsulfat getrocknet.

## Beispiel 1

100 Teile eines durch Trimethylsiloxygruppen endblockierten Diorganopolysiloxans aus 99,5 Molprozent Dimethylsiloxaneinheiten und 0,5 Molprozent Vinylmethylsiloxaneinheiten mit einer Viskosität von $5 \cdot 10^6$ mPa · s bei 25°C werden zunächst mit 7 Teilen eines in den endständigen Einheiten je eine Si-gebundene Hydroxylgruppe aufweisenden Dimethylpolysiloxans mit einer Viskosität von 40 mPa · s bei 25°C, 40 Teilen pyrogen in der Gasphase erzeugten Siliciumdioxyd mit einer Oberfläche von 200 $m^2/g$, 40 Teilen Furnace-Ruß mit einer Oberfläche von 80 $m^2/g$ (weitere Kennzahlen des Furnace-Rußes: Nigrometerwert: 90; mittlere Teilchengröße: 27 Millimikrometer; flüchtige Bestandteile: 2%; pH-Wert: 9) und 5 Teilen Acetylenruß mit einer durchschnittlichen Oberfläche von 250 $m^2/g$, dann mit 15 ppm Platin in Form der Lösung, deren Herstellung oben beschrieben wurde, und schließlich mit 3 Teilen eines mit Trimethylsiloxygruppen endblockierten Methylwasserstoffpolysiloxans mit einer Viskosität von 40 mPa · s bei 25°C vermischt. Die so erhaltene Mischung wird durch Extrudieren zu einer Folie geformt, die 10 Minuten auf 170°C und 4 Stunden auf 200°C erwärmt wird.

Bei Null-Last und Fremdbeheizung steigt der spezifische elektrische Widerstand zwischen 20 und 80°C von 1300 Ohm · cm auf 1400 Ohm · cm und zwischen 80°C, der Schalttemperatur, und 120°C von den 1400 Ohm · cm auf über $10^6$ Ohm · cm. Auch nach mehrwöchiger Temperaturbelastung unter Eigenbeheizung ist keine Änderung der Werte des spezifischen elektrischen Widerstands zu beobachten.

## Beispiel 2

Die in Beispiel 1 angegebene Arbeitsweise wird wiederholt mit den Abänderungen, daß anstelle der 40 Teile des Furnace-Rußes 20 Teile des gleichen Furnace-Rußes und anstelle der 5 Teile des Acetylenrußes 15 Teile des gleichen Acetylenrußes verwendet werden.

Bei Null-Last und Fremdbeheizung steigt der spezifische elektrische Widerstand zwischen 20 und 170°C von 110 Ohm · cm auf 140 Ohm · cm und zwischen 170°C, der Schalttemperatur, und 240°C von den 140 Ohm · cm auf $10^6$ Ohm · cm.

## Patentansprüche

1. Verfahren zum Herstellen von elektrisch leitfähigen Organopolysiloxanelastomeren durch Vernetzen von Massen auf Grundlage von Diorganopolysiloxan und elektrisch leitfähigem Ruß durch Anlagerung von Si-gebundenem Wasserstoff an aliphatische Mehrfachbindung oder durch ionisierende Strahlung, dadurch gekennzeichnet, daß die zu vernetzenden Massen als elektrisch leitfähigen Ruß 15 bis 60 Gewichtsprozent, bezogen auf das Gewicht von Organopolysiloxan, Furnace-Ruß mit einer Oberfläche von 40 bis 100 $m^2/g$ und 5 bis 25 Gewichtsprozent, bezogen auf das Gewicht von Organopolysiloxan, Acetylenruß enthalten.

2. Verfahren nach Anspruch 1, dadurch gekennzeichnet, daß die zu vernetzenden Massen 20 bis 40 Gewichtsprozent, bezogen auf das Gewicht von Organopolysiloxan, Furnace-Ruß und insgesamt 25 bis 50 Gewichtsprozent, bezogen auf das Gewicht von Organopolysiloxan, elektrisch leitfähigen Ruß enthalten.

3. Anwendung der Verfahren nach Anspruch 1 oder 2 zum Herstellen von elektrisch leitenden Platten, Beschichtungen, Bändern und Profilen.

## Claims

1. Process for the production of electrically conductive organopolysiloxane elastomers by crosslinking compositions based on diorganopolysiloxanes and electrically conductive carbon black by adding Si-bonded hydrogen to aliphatic multiple bonds or by ionising radiation, characterised in that the compositions to be crosslinked contain, as the electrically conductive carbon black, 15 to 60% by weight, based on the weight of organopolysiloxane, of furnace black having a specific surface area of 40 to 100 $m^2/g$ and 5 to 25% by weight, based on the weight of organopolysiloxane, of acetylene black.

2. Process according to claim 1, characterised in that the compositions to be crosslinked contain 20 to 40% by weight, based on the weight of organopolysiloxane, of furnace black and a total of 25 to 50% by weight, based on the weight of organopolysiloxane, of electrically conductive carbon black.

3. Use of the process according to claim 1 or 2 for the production of electrically conductive plates, coatings, belts and shaped bodies.

## Revendications

1. Procédé de préparation d'élastomères de polyorganosiloxanes conducteurs de l'électricité dans lequel on réticule des matières à base d'un poly-diorganosiloxane et d'un noir de carbone électroconducteur par fixation d'hydrogène porté par Si sur une liaison multiple aliphatique ou par un rayonnement ionisant, procédé caractérisé en ce que les matières à réticuler contiennent, comme noir de carbone conducteur de l'électricité, de 15 à 60% en poids, par rapport au poids du polyorganosiloxane, d'un noir de four ayant une surface de 40 à 100 $m^2/g$ et de 5 à 25% en poids, par rapport au poids du polyorganosiloxane, d'un noir d'acétylène.

2. Procédé selon la revendication 1, caractérisé en ce que les matières à réticuler contiennent de 20 à 40% en poids, par rapport au poids du polyorganosiloxane, d'un noir de four, et, au total, de 25 à 50% en poids, par rapport au poids du polyorganosiloxane, d'un noir de carbone conducteur de l'électricité.

3. Application des procédés selon la revendication 1 ou 2 à la fabrication de plaques, revêtements, bandes et profilés conducteurs de l'électricité.